# EUROPEAN PATENT SPECIFICATION

(11) **EP 0 607 585 B1**
(45) Date of publication and mention of the grant of the patent: **10.09.1997**
(21) Application number: 93120393.9
(22) Date of filing: 17.12.1993
(51) Int. Cl.: B60K 37/00

(54) **A dashboard for vehicles, incorporating a heat-exchanger**
Armaturenbrett für Fahrzeuge mit integriertem Wärmetauscher
Tableau de bord pour véhicules avec échangeur de chaleur

(30) Priority: 30.12.1992 IT TO921057
(43) Date of publication of application: 27.07.1994
(73) Proprietor: MAGNETI MARELLI CLIMATIZZAZIONE S.r.l., 10046 Poirino (Torino) (IT)
(72) Inventor: Molari, Aurelio, I-10025 Pino Torinese (TO) (IT); Cristante, Luigi, I-10091 Alpignano (TO) (IT)
(74) Representative: Marchitelli, Mauro

(56) References cited:
- EP-A- 0 108 522
- EP-A- 0 185 856
- FR-A- 2 385 554

## Description

The present invention relates to a dashboard for vehicles according to the preamble to Claim 1, which is known from EP-A-0 185 856.

The document FR-A-2,385,554 describes a dashboard comprising a body located at the base of the windscreen of the vehicle and defining a pair of longitudinal ducts connected to a transverse duct which receives an air-flow which passes through a heat-exchanger.

EP-A-0 185 856 shows a dashboard for vehicles incorporating an heating or air conditioning unit. A plurality of chambers housing a fan, a heating unit, etc. are integrally formed within the dashboard. Such chambers are interconnected to each other by a plurality of ducts which direct the air-flow to delivery vents.

The object of the present invention is to provide a single device which comprises the dashboard carrying the set of indicating instruments and/or the warning devices and controls of the vehicle, and the heater and/or air-conditioning unit of the vehicle, and which constitutes a preassembled sub-unit which is simpler and lighter than known systems and does not have double walls in correspondence with the heat-exchange system.

According to the invention, this object is achieved by the provision of a dashboard having the characteristics defined in the main claim.

The dashboard according to the invention forms a single body with the air-conditioning unit (including the radiator core for heating and cooling the air and the centrifugal fan) and forms a duct for directing the air-flow to the delivery vents. This solution allows for larger delivery vents from which the air flows into the passenger compartment at a slower speed and hence with less noise. The loss of pressure in the directed air-flow is less than in conventional systems and it is therefore possible to have an electric fan of lower power for a given air-flow or a greater air-flow for an electric fan of a given power. The portion of the dashboard which is visible from the passenger compartment is removable, enabling solutions of different appearance to be provided for a given size and affording access to the equipment disposed within it.

Further characteristics and advantages of the invention will become clear in the course of the detailed description which follows, given purely by way of non-limiting example, with reference to the appended drawings, in which:
Fig. 1 is a schematic, perspective view of a dashboard according to the invention,
Fig. 2 is a schematic view of the dashboard of Fig. 1 without the upper shell which carries the instruments,
Fig. 3 is an exploded, perspective view of the dashboard of Fig. 1,
Fig. 4 shows the detail indicated by the arrow IV in Fig. 1,
Fig. 5 is a section taken on the line V-V of Fig. 4,
Fig. 6 is a front elevational view taken on the arrow VI of Fig. 4,
Fig. 7 is a section taken on the line VII-VII of Fig. 6, and
Figs. 8 and 9 are sections taken on the line VIII-VIII of Fig. 6.

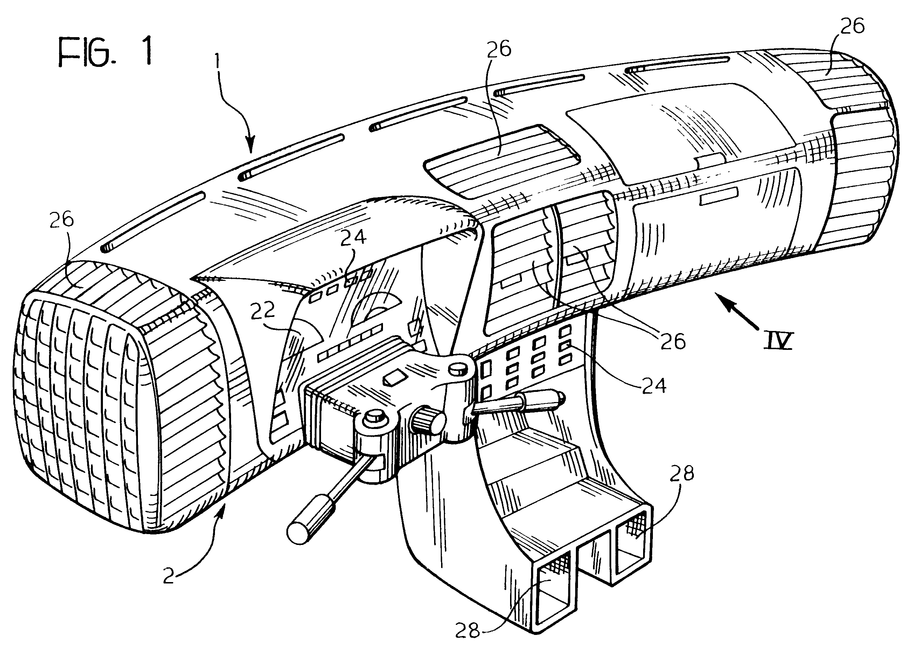

With reference to Figs. 1 to 3, a dashboard, generally indicated 1, is constituted by an upper, substantially tubular body 2 the length of which is equal to the width of the passenger compartment of the vehicle, and a lower, central element 4 which extends essentially vertically and the width and height of which are variable according to the type of vehicle.

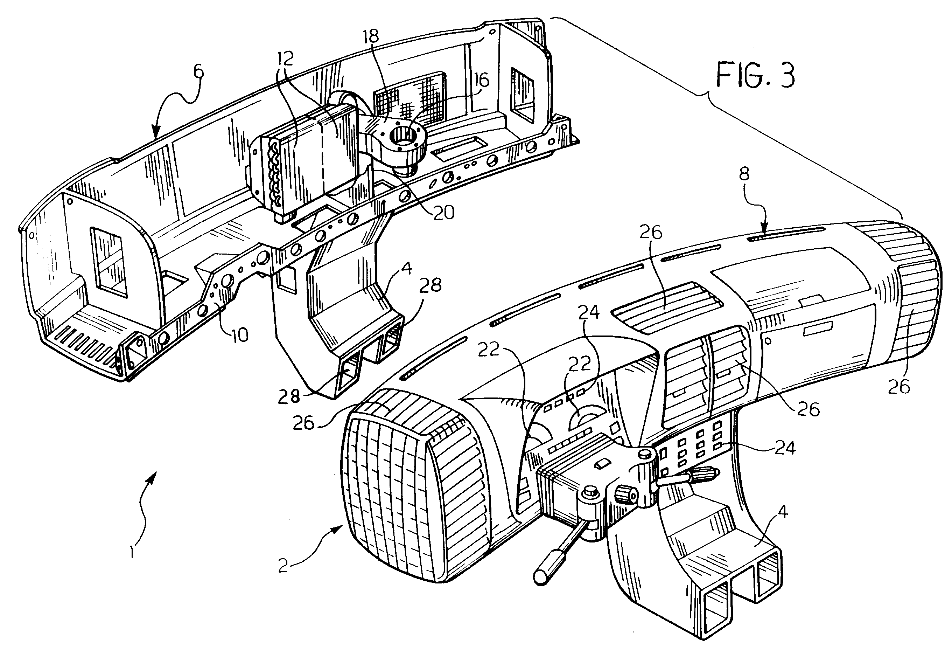

With reference to Fig. 3, the tubular body 2 is constituted by a pair of shells 6, 8. The rear shell 6 may be fixed to a metal cross-member 10 and carries an integral heat-exchanger 12 of known type for heating or conditioning an air-flow for the air-conditioning of the vehicle. The heat-exchanger 12 is housed in a seat formed integrally with the rear shell 6. The air-conditioning air-flow is supplied to the heat-exchanger 12 by means of an electric fan 16 which is connected to the heat-exchanger 12 by means of a supply duct 18. The upper shell 8 is fixed removably to the rear shell 6. The shells 6, 8 define between them a single transverse duct for directing the air-flow output from the heat-exchanger 12. The internal walls of the shells 6, 8 constitute the walls of the duct and are preferably covered with a layer of thermally-insulating, sound-deadening material so that the conditioning of the air is not affected by the external temperature of the dashboard, condensation does not form on its external surface, and the noise of the electric fan is attenuated. The transverse duct defined by the shells 6, 8 may have a longitudinal partition 20 (Fig. 3) which enables differently-conditioned air-flows to be directed towards the right-hand and left-hand sides of the vehicle.

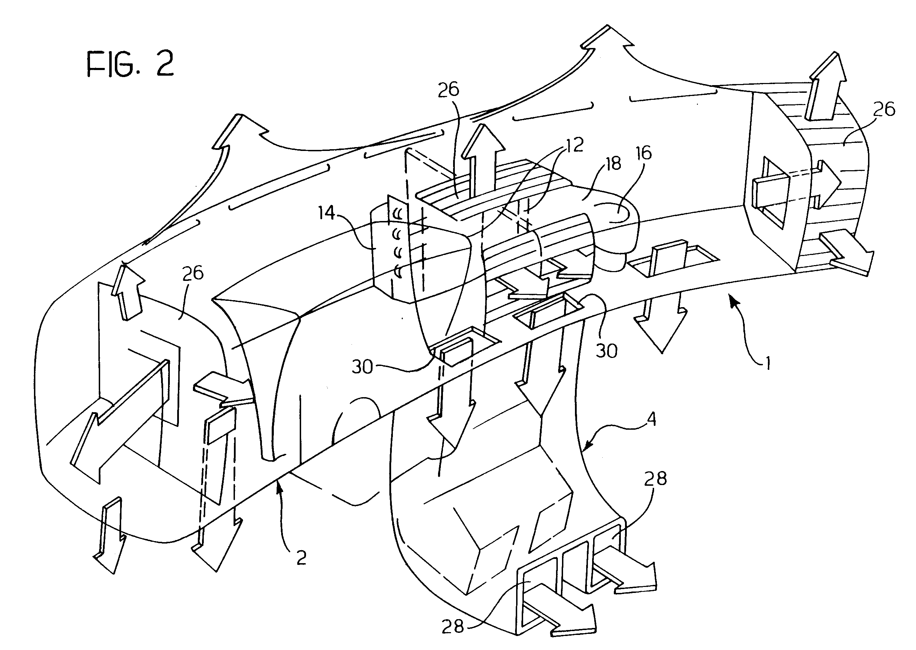

The upper shell 8 supports the set of indicating instruments 22 (Figs. 1 and 2) and the warning devices and controls 24 of the vehicle. The upper shell 8 is removable to afford access to the components disposed within it and may be formed differently according to the different equipment and fittings of the models, but the rear shell 6 remains unchanged for given dimensions of the passenger compartment of the vehicle.

The upper shell 8 and the lower shell 6 have a plurality of pre-oriented or orientable grilles 26 for diffusing the air-conditioning air-flow into the passenger compartment of the vehicle. The diffuser grilles may be larger than those used in conventional systems, since their dimensions are not restricted by the air ducts. The grilles 26 are associated with conventional devices (not shown in the drawings) for shutting off the flow. The elements for shutting off the air-flow through the grilles 26 may be operated by actuators controlled by an electronic control unit which operates the shutters according to a predetermined programme. The air admitted to the passenger compartment may also be shut off manually and at will by the direct operation of the shutters associated with the grilles 26. The base of the lower central element 4 has a pair of vents 28 which enable the conditioned air to reach the rear seats in the passenger compartment. The vents 28 are connected to the transverse duct by means of a pair of holes 30 (Fig. 2) in the internal wall of the rear shell 6.

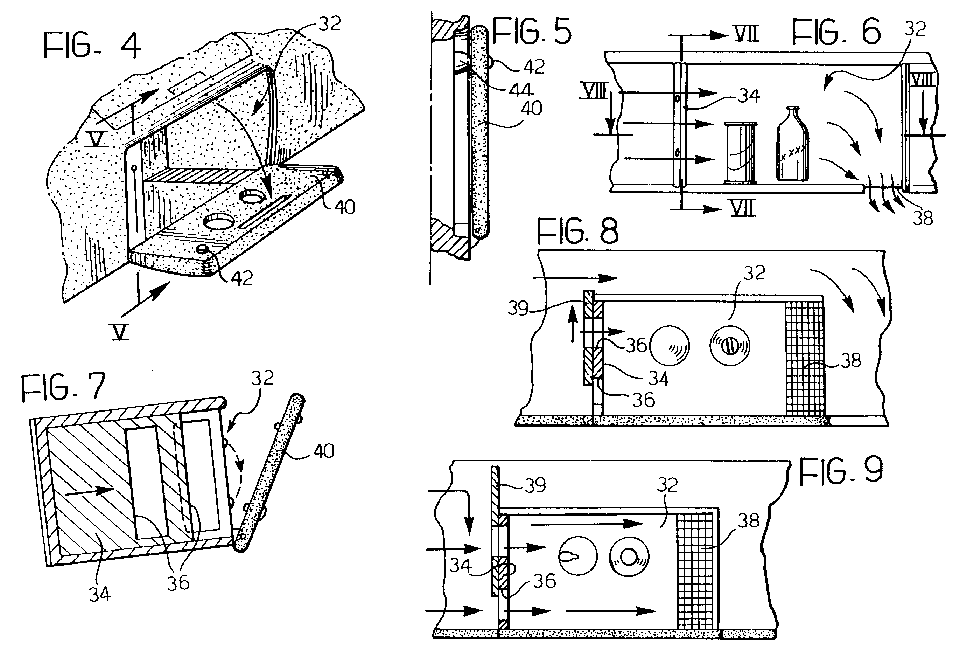

With reference to Figs 4 to 9, the dashboard according to the invention has a glove compartment 32 which has a wall 34 with holes 36 which put the interior of the glove compartment 32 into communication with the air-conditioning duct. The air-flow which enters through the holes 36 heats or cools the contents of the glove compartment 32 and leaves the compartment 32 through a grille 38 which communicates with the passenger compartment. A slidable shutter 39 associated with the wall 34 chokes the main duct to the benefit of the air-flow through the compartment 32. The member 39 is controlled by a manually-operable lever 40. The door for closing the glove compartment 32 has a hole or a transparent portion 42 facing a lamp 44 which indicates whether the shutter 39 is in the configuration which corresponds to a free flow of air-conditioning air through the interior of the glove compartment 32.

## Claims

1. A dashboard for vehicles, comprising a body (2) which is located at the base of the windscreen of the vehicle and supports the set of indicating instruments and/or warning devices and controls (22, 24) of the vehicle, and a ventilation system including:
- a heat-exchange device (12), forming an integral part of the dashboard,
- a duct (18) for supplying an air-flow to the heat-exchanger (12),
- a plurality of delivery vents (26, 28) in the body (2) for supplying the ventilation air-flow to the passenger compartment of the vehicle, and
- a distribution system which directs the air-flow from the output of the heat-exchanger (12) to the delivery vents (26),
characterised in that the body (2) of the dashboard is constituted by a pair of shells (6, 8) which define between them a hollow volume without any internal duct for distributing the air-flow, said hollow volume defining a single transverse duct which constitutes the distribution system of the air flow and which houses the heat-exchanger (12), all of the delivery vents (26, 28) communicating directly with said hollow volume.

2. A dashboard according to Claim 1, characterized in that the duct has a longitudinal partition (20) which is disposed essentially in the vicinity of the centreline of the vehicle and divides the air-flow from the heat-exchanger (12) into two parts.

3. A dashboard according to Claim 1, characterized in that the body (2) comprises a rear shell (6) with means for supporting the heat-exchanger (12) and a removable upper shell (8) which supports the indicating instruments and/or the warning devices and controls (22, 24) of the vehicle, the assembled shells (6, 8) defining the duct between them.

4. A dashboard according to Claim 3, characterized in that the internal surfaces of the shells (6, 8) are at least partially covered with thermally-insulating and sound-deadening material.

5. A dashboard according to Claim 1, characterized in that it comprises a glove compartment (32) which extends within the duct and is struck by the air-flow from the heat-exchanger (12), the interior of the glove compartment communicating with the duct by means of at least one hole (36) associated with controllable shutter means (39).

6. A dashboard according to Claim 5, characterized in that it comprises means (44) for indicating the condition in which the shutter means (39) enable a conditioned air-flow to pass through the space inside the glove compartment (32).

7. A dashboard according to Claim 1, characterized in that the air-flow can be controlled either manually or automatically.

## Patentansprüche

1. Armaturenbrett für Fahrzeuge, das einen Körper (2), der an der Basis der Windschutzscheibe des Fahrzeugs angeordnet ist und die Gruppe der Anzeigeinstrumente und / oder Warnvorrichtungen und Bedienungselemente (22, 24) des Fahrzeugs trägt und ein Lüftungssystem umfaßt, das
- eine Wärmetauschervorrichtung (12), die einen wesentlichen Bestandteil des Armaturenbretts bildet
- einen Leitkanal (18), um den Wärmetauscher (12) mit einem Luftstrom zu versorgen
- eine Mehrzahl von Auslaßentlüftungs-öffnungen (26, 28) im Körper (2), um den Fahrgastraum des Fahrzeugs mit dem Lüftungsluftstrom zu versorgen und
- ein Verteilungssystem, das den Luftstrom vom Auslaß des Wärmetauschers (12) zu den Auslaßentlüftungsöffnungen (26) leitet,
beinhaltet, **dadurch gekennzeichnet**, daß der Körper (2) des Armaturenbretts aus zwei Mantelgehäusen (6, 8) aufgebaut ist, die zwischen einander einen Hohlraum ohne inneren Leitkanal zur Verteilung des Luftstroms bilden, wobei der Hohlraum einen einzelnen, querverlaufenden Leitkanal formt, der das Verteilungssystem des Luftstromes bildet und der den Wärmetauscher (12) aufnimmt, wobei alle Auslaßentlüftungsöffnungen (26, 28) direkt mit diesem Hohlraum in Verbindung stehen.

2. Armaturenbrett nach Anspruch 1, **dadurch gekennzeichnet**, daß der Leitkanal eine Längsteilung (20), die im wesentlichen in der Nähe der Mittellinie des Fahrzeugs angeordnet ist, aufweist und den Luftstrom vom Wärmetauscher (12) in zwei Teile teilt.

3. Armaturenbrett nach Anspruch 1, **dadurch gekennzeichnet**, daß der Körper (2) ein rückwärtiges Mantelgehäuse (6), mit Mittel zum Tragen des Wärmetauschers (12) und ein abnehmbares oberes Mantelgehäuse (8), das die Anzeigeinstrumente und / oder Warnvorrichtungen und Bedienungselemente (22, 24) des Fahrzeugs trägt, umfaßt, wobei die zusammengesetzten Mantelgehäuse (6, 8) den Leitkanal zwischen einander bilden.

4. Armaturenbrett nach Anspruch 3, **dadurch gekennzeichnet**, daß die inneren Flächen der Mantelgehäuse (6, 8) zumindest teilweise mit einem thermisch isolierenden, schalldämmenden Material bedeckt sind.

5. Armaturenbrett nach Anspruch 1, **dadurch gekennzeichnet**, daß es ein Handschuhfach (32), das sich in den Leitkanal ausdehnt und vom Luftstrom aus dem Wärmetauscher (12) angeströmt wird, umfaßt, wobei das Innere des Handschuhfachs mit dem Leitkanal über Mittel von mindestens einer Öffnung (36), die mit steuerbaren Schließmittel (39) versehen ist, verbunden ist.

6. Armaturenbrett nach Anspruch 5, **dadurch gekennzeichnet**, daß es Mittel (44) zum Anzeigen des Zustandes umfaßt, in dem die Schließmittel (39) einen klimatisierten Luftstrom durch die Lücke in das Innere des Handschuhfachs (32) ermöglichen.

7. Armaturenbrett nach Anspruch 1, **dadurch gekennzeichnet**, daß der Luftstrom entweder manuell oder automatisch gesteuert werden kann.

## Revendications

1. Tableau de bord pour véhicules, comprenant un corps (2) qui est situé à la base du pare-brise du véhicule et supporte un jeu d'instruments indicateurs et/ou de dispositifs d'avertissement et de commandes (22, 24) du véhicule, et un système de ventilation comprenant :
- un dispositif d'échange de chaleur (12) qui fait partie intégrante du tableau de bord,
- un conduit (18) servant à envoyer un flux d'air à l'échangeur de chaleur (12),
- une pluralité d'ouïes de sortie (26, 28) prévues dans le corps (2) pour envoyer le flux d'air de ventilation à l'habitacle du véhicule, et
- un système de distribution qui dirige le flux d'air issu de la sortie de l'échangeur de chaleur (12) vers les ouïes de sortie (26),
caractérisé en ce que le corps (2) du tableau de bord est constitué par deux coques (6, 8) qui définissent entre elles un volume creux sans aucun conduit intérieur pour la distribution du flux d'air, ledit volume creux définissant un unique conduit transversal qui constitue le système de distribution du flux d'air et qui loge l'échangeur de chaleur (12), toutes les ouïes de sortie (26, 28) communiquant directement avec ledit volume creux.

2. Tableau de bord selon la revendication 1, caractérisé en ce que le conduit présente une cloison longitudinale (20) qui est disposée sensiblement dans le voisinage de l'axe du véhicule et qui divise le flux d'air issu de l'échangeur de chaleur (12) en deux parties.

3. Tableau de bord selon la revendication 1, caractérisé en ce que le corps (2) comprend une coque arrière (6) munie de moyens destinés à supporter l'échangeur de chaleur (12) et une coque supérieure amovible (8) qui supporte les instruments indicateurs et/ou les dispositifs d'avertissement et les commandes (22, 24) du véhicule, les deux coques (6, 8) assemblées définissant le conduit entre elles.

4. Tableau de bord selon la revendication 3, caractérisé en ce que les surfaces intérieures des coques (6, 8) sont au moins partiellement revêtues d'une matière isolante thermique et insonorisante.

5. Tableau de bord selon la revendication 1, caractérisé en ce qu'il comprend une boîte à gants (32) qui s'étend à l'intérieur du conduit et est frappée par le flux d'air issu de l'échangeur de chaleur (12), l'intérieur de la boîte à gants communiquant avec le conduit par au moins un trou (36) associé à des moyens obturateurs commandés (39).

6. Tableau de bord selon la revendication 5, caractérisé en ce qu'il comprend des moyens (44) servant à indiquer l'état dans lequel les moyens obturateurs (39) permettent à un flux d'air conditionné de passer à travers l'espace intérieur de la boîte à gants (32).

7. Tableau de bord selon la revendication 1, caractérisé en ce que le flux d'air peut être commandé, soit manuellement, soit automatiquement.
